# EUROPÄISCHE PATENTSCHRIFT

(11) **EP 3 371 351 B1**
(45) Veröffentlichungstag und Bekanntmachung des Hinweises auf die Patenterteilung: **15.12.2021**
(21) Anmeldenummer: 16781339.3
(22) Anmeldetag: 06.10.2016
(51) Int. Cl.: D01G 31/00, G01N 21/85, G01N 21/89

(54) **VORRICHTUNG ZUR FREMDTEILERKENNUNG IN DER SPINNEREIVORBEREITUNG**
IMPURITIES DETECTING DEVICE IN THE FIBRES PRE TREATMENT STEP
DISPOSITIF DE DÉTECTION D'IMPURTÉS UTILISÉ LORS DU TRAITEMENT PRÉLIMINAIRE DES FIBRES

(30) Priorität: 03.11.2015 DE 102015118847
(43) Veröffentlichungstag der Anmeldung: 12.09.2018
(73) Patentinhaber: Trützschler GmbH & Co. KG, 41199 Mönchengladbach (DE)
(72) Erfinder: ENGELS, Guido, 41569 Rommerskirchen (DE)
(86) Internationale Anmeldenummer: PCT/EP2016/073848
(87) Internationale Veröffentlichungsnummer: WO 2017/076570

(56) Entgegenhaltungen:
- WO-A1-2008/058573
- WO-A1-2014/206508
- CN-A- 102 004 913
- DE-A1-102006 057 215
- DE-A1-102008 034 385

## Beschreibung

Die vorliegende Erfindung betrifft eine Vorrichtung zur Fremdteilerkennung in der Spinnereivorbereitung, aufweisend einen Inspektionskanal, durch den ein Fasermaterialstrom hindurchführbar ist, wobei im Fasermaterialstrom zu erkennende Fremdteile vorhanden sind, wofür eine erste Beleuchtungseinheit und wenigstens eine zweite Beleuchtungseinheit zur Einstrahlung von Licht in den Inspektionskanal vorgesehen sind, und wobei wenigstens eine Kamera vorgesehen ist, mit der von den Beleuchtungseinheiten erzeugtes und von dem Fremdteil reflektiertes Licht detektierbar ist.

Die DE 10 2013 010 468 A1 offenbart eine Vorrichtung zur Fremdteilerkennung in der Spinnereivorbereitung mit einem Inspektionskanal, durch den ein Fasermaterialstrom in Form von Faserflocken, beispielsweise Baumwollflocken, hindurchgeführt wird. Im Fasermaterialstrom befinden sich zu erkennende Fremdteile, die helle, farblose oder transparente Kunststoffe betreffen können, wie beispielsweise Reste von Verpackungsfolien, Verpackungsgewebe aus Polyethylen oder Polypropylen. Diese Fremdteile müssen zur Reinigung des Fasermaterials, also beispielsweise der Baumwollflocken, aus dem Materialstrom ausgeschieden werden. Aufgrund des geringen optischen Kontrastes relativ zum Fasermaterial sind derartige Fremdstoffe nur schwer zu erkennen. WO 2014/206508 A1, DE 10 2006 057215 A1,

DE 10 2008 034385 A1, CN 102 004 913 A, WO 2008/058573 A1 offenbaren herkömmliche Vorrichtungen zum Erkennen von Fremdstoffen in Fasergut an einer Spinnereivorbereitungsanlage.

Zur Erkennung der Fremdteile im Fasermaterialstrom dienen eine erste Beleuchtungseinheit und wenigstens eine zweite Beleuchtungseinheit zur Einstrahlung von Licht in den Inspektionskanal. Hierfür weist der Inspektionskanal einen Inspektionsbereich mit transparenten Wänden auf. Weiterhin sind zwei Kameras vorgesehen, mit denen von den Beleuchtungseinheiten erzeugtes und von dem Fremdteil reflektiertes Licht detektierbar ist.

Wird das an den Fasern und an den Fremdteilen reflektierte Licht von den Kameras aufgenommen, können diese das reflektierte Licht hinsichtlich Helligkeit und Farbe in einer Auswerteeinheit analysieren. Dabei nehmen die Kameras das Licht in getrennten Kanälen in roten, grünen oder blauen Wellenlängenbereichen auf und verarbeiten dieses separat weiter. Diese Farbinformation wird in der Auswerteeinheit verwendet, um Fremdteile aufgrund ihrer Helligkeits- oder Farbabweichung zum Fasermaterial zu erkennen und nachfolgend durch eine Ausscheideeinheit auszuscheiden. Zusätzlich zur Farbinformation können die Kameras polarisiertes Licht aufnehmen, das heißt, die Kameras können im einfachsten Fall den Unterschied zwischen einem unpolarisierten Licht und einem polarisierten Licht erfassen. Im Falle von Lichtreflexionen an den Faserflocken wird die Polarisation des Lichtes teilweise durch diffuse Reflexion aufgehoben und die Kameras erfassen im Wesentlichen unpolarisiertes Licht. Im Falle von glänzenden Kunststoffteilen, zum Beispiel Folien, Polypropylenbändern oder dergleichen, also bei der Reflexion an Fremdteilen, wird das polarisierte Licht im Wesentlichen polarisiert weiter reflektiert, und die Kameras erkennen polarisiertes Licht. Da die Kameras in der Lage sind, mit Hilfe der Auswerteeinheit den Polarisationszustand zu unterscheiden, beispielsweise ob es sich um polarisiertes oder unpolarisiertes Licht handelt, kann die Auswerteeinheit somit auch Faserflocken von glänzenden Fremdteilen unterscheiden und diese nachfolgend ausscheiden. Mittels einer nachgeschalteten Steuereinheit können die erkannten Fremdteile durch eine Ausschusseinheit aus dem Fasermaterialstrom herausgeführt werden, um diesen schließlich von den Fremdteilen zu reinigen.

Beim Betrieb einer solchen Vorrichtung hat sich nachteilig gezeigt, dass nicht alle Bauwollflocken das Licht vollständig depolarisieren, und daher stellt sich neben der gewünschten Detektion der Fremdteile ein gewisser Beifang ein, der aus Fasermaterial besteht und unerwünschte Abfallmengen hervorruft.

Aufgabe der Erfindung ist die Weiterbildung einer Vorrichtung zur Fremdteilerkennung in der Spinnereivorbereitung, mit der ein verringerter, d.h. ein insbesondere minimaler Anteil von Fasermaterial bei der Ausscheidung von Fremdteilen mit ausgeschieden wird.

Diese Aufgabe wird ausgehend von einer Vorrichtung zur Fremdteilerkennung in der Spinnereivorbereitung gemäß dem Oberbegriff des Anspruches 1 und ausgehend von einem Verfahren zum Betrieb einer solchen Vorrichtung gemäß dem Oberbegriff des Anspruches 8 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass die erste Beleuchtungseinheit zur Aussendung von Licht mit einer ersten Polarisationsrichtung und die zweite Beleuchtungseinheit zur Aussendung von Licht mit einer zweiten Polarisationsrichtung ausgebildet ist, wobei die zweite Polarisationsrichtung von der ersten Polarisationsrichtung abweicht.

Kern der Erfindung ist die Differenzierung des in den Inspektionskanal eingestrahlten Lichtes auf Grundlage voneinander abweichender Polarisationsrichtungen, sodass die wenigstens eine Kamera, beispielsweise aber auch zwei sich gegenüberliegend zum Inspektionskanal angeordnete Kameras, eine Information darüber zu erkennen vermag, ob das eingestrahlte Licht von der gleichen Richtung in den Kanal eingestrahlt wird, von der auch die Kamera in den Kanal schaut, oder ob das Licht von einer gegenüberliegenden Seite des Inspektionskanals relativ zur Anordnung der Kamera eingestrahlt wird. Wird das Licht von der gleichen Seite eingestrahlt, ergeben sich deutlich geringere Streuungen der Polarisation an den Faserflocken, wodurch die Empfindlichkeit der Kamera entsprechend gesteigert werden kann. Damit kann die Selektivität der Fremdteile erhöht werden, sodass schließlich der ausgeschiedene Anteil an Fasermaterial reduziert wird.

Die erste Polarisationsrichtung und die zweite Polarisationsrichtung verlaufen dabei idealerweise senkrecht zueinander. Die erste Beleuchtungseinheit ist dabei auf der gleichen Seite des Inspektionskanals angeordnet wie die Anordnung der Kamera und die zweite Beleuchtungseinheit ist auf der der ersten Beleuchtungseinheit und der Kamera gegenüberliegenden Seite des Inspektionskanals angeordnet. Die wenigstens eine Kamera ist dabei zur getrennten Detektion von Licht in den Polarisationsrichtungen ausgebildet, und eine erste Lichtinformation in einem ersten Polarisationskanal und eine zweite Lichtinformation in einem zweiten Polarisationskanal ist von der Kamera an eine Auswerteeinheit übermittelbar. Vorzugsweise sind zwei Kamers vorgesehen, die sich auf jeder der beiden Seiten des Inspektionskanals befinden, ferner befinden sich vorteilhafterweise auf jeder Seite des Inspektionskanals zwei Beleuchtungseinheiten mit zueinander gleicher Polarisationsrichtung.

Die Auswerteeinheit ist mit weiterem Vorteil zur Bildung eines Differenzwertes zwischen einem Wert der Lichtinformation aus dem ersten Polarisationskanal und einem Wert der Lichtinformation aus dem zweiten Polarisationskanal eingerichtet. Weiterhin ist folgend auf die Auswerteeinheit eine Steuereinheit vorgesehen und dazu eingerichtet, aus einem positiven oder negativen Differenzwert eine Einstrahlrichtung auf ein Fremdteil zu ermitteln, insbesondere ob Licht von der ersten Beleuchtungseinheit bezogen auf die Anordnung der Kamera auf der gleichen Seite des Inspektionskanals detektiert wird, oder ob Licht von der zweiten Beleuchtungseinheit bezogen auf die Anordnung der Kamera auf der gegenüberliegenden Seite des Inspektionskanals detektiert wird.

Der entscheidende Vorteil der erfindungsgemäßen Ausführung der Vorrichtung mit den Beleuchtungseinheiten, die Licht mit unterschiedlichen Polarisationsrichtungen aussenden, besteht nun darin, dass sich die Faserflocken und die Fremdteile bezüglich der Einstrahlwinkel und der Polarisationsrichtungen unterschiedlich verhalten. Die Kamera erkennt einen auf einem Fremdteil erzeugten Glanz nicht nur positive, sondern auch negative Differenzen, die gebildet werden zwischen den Werten der Lichtinformation aus den Polarisationskanälen. Positive Differenzen entstehen, wenn die Oberfläche des Fremdteils vorwiegend vertikal und damit längs des Inspektionskanals orientiert ist, das heißt das Licht wird von Beleuchtungseinheiten reflektiert, die sich auf der gleichen Seite befinden wir die Kamera. Negative Differenzen entstehen hingegen, wenn die Oberfläche des Fremdteils eher waagerecht orientiert ist und Licht von der Kamera aufgenommen wird, die von einer Beleuchtungseinheit erzeugt wird, die sich auf der gegenüberliegenden Seite des Inspektionskanals in Bezug auf die Anordnung der Kamera befindet.

Unerwünschte Detektionen aufgrund von Fasermaterialien entstehen aber hauptsächlich von dem flach eingestrahlten Licht der Beleuchtungseinheit auf der gegenüberliegenden Seite, sodass ein negativer Differenzwert ermittelt wird. Da die Auswerteeinheit anhand des Vorzeichens des Differenzwertes Abweichungen in den Kanälen unterscheiden kann, kann die Auswerteeinheit auch die Glanzrichtungen voneinander unterscheiden und entsprechend parametrieren. Beispielsweise kann die Kamera dann mit höheren Empfindlichkeiten in Kontrast und Größe auswerten, wenn Licht von einer Beleuchtungseinheit reflektiert wird, die sich auf einer Seite des Inspektionskanals befindet, die der Seite der Kamera entspricht. Mit anderen Worten kann die Abweichung mit positiven Differenzen mit einer höheren Empfindlichkeit ausgewertet werden, da keine Störungen vorliegen, die die Faserflocken auf ein akzeptables Maß der Empfindlichkeit der Auswertung reduziert. Hierdurch ergibt sich insgesamt eine hohe Empfindlichkeit für Fremdteile, welche detektiert werden sollen, bei gleichzeitig geringerem Anteil an unerwünschten Detektionen und damit einem geringeren Anteil an unerwünscht ausgeschiedenem Fasermaterial.

Die Erfindung richtet sich weiterhin auf ein Verfahren zum Betrieb einer Vorrichtung zur Fremdteilerkennung in der Spinnereivorbereitung, aufweisend einen Inspektionskanal, durch den ein Fasermaterialstrom hindurchgeführt wird, wobei im Fasermaterialstrom zu erkennende Fremdteile mitgeführt werden, wobei mit einer ersten Beleuchtungseinheit und mit wenigstens einer zweiten Beleuchtungseinheit jeweils Licht in den Inspektionskanal eingestrahlt wird, und wobei wenigstens eine Kamera vorgesehen ist, mit der von den Beleuchtungseinheiten erzeugtes und von dem Fremdteil reflektiertes Licht detektiert wird. Das Verfahren zeichnet sich dadurch aus, dass mit der ersten Beleuchtungseinheit Licht mit einer ersten Polarisationsrichtung ausgesendet wird, und mit der zweiten Beleuchtungseinheit wird Licht mit einer zweiten Polarisationsrichtung ausgesendet, wobei die zweite Polarisationsrichtung von der ersten Polarisationsrichtung abweicht, wobei eine erste Lichtinformation in einem ersten Polarisationskanal und eine zweite Lichtinformation in einem zweiten Polarisationskanal von der Kamera an eine Auswerteeinheit übermittelt wird, und wobei mit der Auswerteeinheit ein Differenzwert zwischen einem Wert der Lichtinformation aus dem ersten Polarisationskanal und einem Wert der Lichtinformation aus dem zweiten Polarisationskanal gebildet wird. Die Lichtinformation kann dabei die Intensität des Lichtes in der jeweiligen Polarisationsrichtung betreffen, sodass über den gebildeten Differenzwert in Abhängigkeit von positiven oder negativen Vorzeichen erkannt werden kann, ob Licht von einer Beleuchtungseinheit auf der gleichen Seite der Kamera erkannt wird oder ob Licht von einer Beleuchtungseinheit erkannt wird, die sich auf der gegenüberliegenden Seite des Inspektionskanals relativ zur Anordnung der Kamera befindet.

Nach einer vorteilhaften Weiterbildung des Verfahrens ist eine Steuereinheit vorgesehen, mit der aus einem positiven oder negativen Differenzwert eine Einstrahlrichtung auf das Fremdteil ermittelt wird, insbesondere ob Licht einstrahlend von der ersten Beleuchtungseinheit auf der gleichen Seite des Inspektionskanals bezogen auf die Anordnung der Kamera detektiert wird oder ob Licht einstrahlend von der zweiten Beleuchtungseinheit auf der gegenüberliegenden Seite des Inspektionskanals bezogen auf die Anordnung der Kamera detektiert wird.

Das Verfahren sieht dabei insbesondere vor, dass die Auswerteeinheit abhängig von der Einstrahlrichtung des Lichtes in der Empfindlichkeit zur Erkennung des Fremdteils unterschiedlich parametriert wird. Bei Abweichungen mit positiven Differenzwerten kann mit höherer Empfindlichkeit detektiert werden, also wenn Licht von der Beleuchtungseinheit reflektiert wird, die auf der gleichen Seite angeordnet ist wie die Kamera. Derartige Reflexionen finden beispielsweise statt, wenn die Fremdteile eine eher vertikale Orientierung längs des Inspektionskanals aufweisen, sodass mit einer erhöhten Empfindlichkeit auch kleinere oder kleinste Fremdteile erkannt werden können. Ferner können Fremdteile mit einem nur geringen Kontrast gegenüber den Faserflocken erkannt werden, sodass im Ergebnis der Anteil an mit ausgeschiedenem Fasermaterial minimiert wird.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematisierte Ansicht der erfindungsgemäßen Vorrichtung, wobei die voneinander abweichenden Polarisationsrichtungen der Beleuchtungseinheiten angedeutet sind,
- Figur 2: eine erste Einstrahlsituation mit einer Beleuchtungseinrichtung, wobei Licht von einer Kamera erkannt wird, die sich auf der gleichen Seite befindet wie die Beleuchtungseinrichtung und
- Figur 3: eine zweite Einstrahlsituation mit einer Beleuchtungseinrichtung auf einer Seite des Inspektionskanals, die der Anordnung der Kamera gegenüberliegend zum Inspektionskanal angeordnet ist.

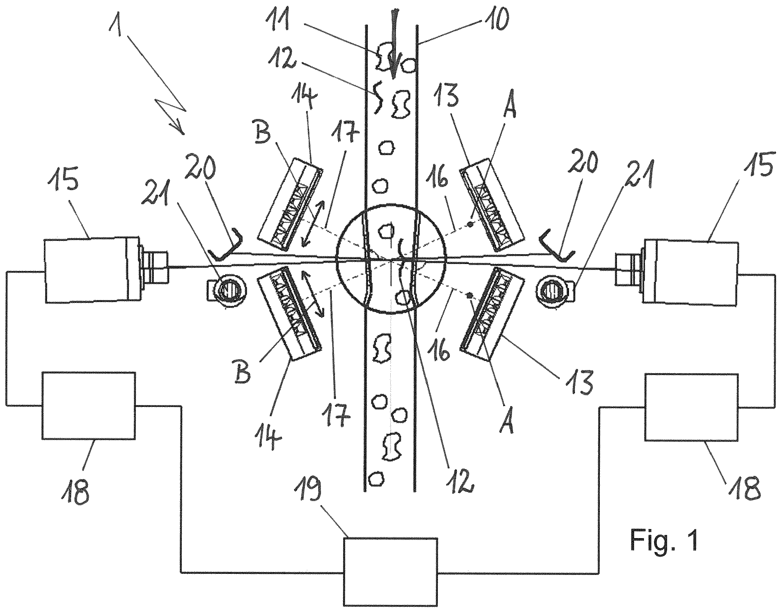

Figur 1 zeigt in einer schematischen Darstellung die Vorrichtung 1 zur Fremdteilerkennung in der Spinnereivorbereitung. Die Vorrichtung 1 ist an einem Inspektionskanal 10 angeordnet, und durch den Inspektionskanal wird in einer Längsrichtung gemäß dem gezeigten Richtungspfeil ein Fasermaterialstrom 11 hindurchgeleitet, der beispielsweise aus Baumwollflocken besteht. Zusätzlich zu den Baumwollflocken befindet sich im Fasermaterialstrom ein Anteil von Fremdteilen 12, welcher von der Vorrichtung 1 detektiert werden kann.

Hierfür weist die Vorrichtung 1 zwei erste Beleuchtungseinheiten 13 auf einer ersten Seite des Inspektionskanals 10 auf, und es sind zwei weitere Beleuchtungseinheiten 14 auf der gegenüberliegenden Seite des Inspektionskanals 10 angeordnet. Mit den Beleuchtungseinheiten 13 auf der ersten Seite des Inspektionskanals wird Licht 16 in den Inspektionskanal 10 eingestrahlt, und mit den zweiten Beleuchtungseinheiten 14 wird Licht 17 in den Inspektionskanal 10 eingestrahlt. Auf jeder der beiden Seiten befindet sich eine Kamera 15, welche das eingestrahlte und an dem Fasermaterial 11 und insbesondere an den Fremdteilen 12 reflektierte Licht 16, 17 erkennen und analysieren können. Um eine definierte Hintergrundfarbe zu erzeugen, sind Hintergrundelemente 20 vorgesehen, die sich in Hauptachsenrichtung der Kamera auf der jeweils gegenüberliegenden Seite des Inspektionskanals 10 befinden und mit Hintergrundbeleuchtungen 21 insbesondere mit weißem Licht ausgeleuchtet sind. Die Hintergrundbeleuchtung 21 weist beispielsweise Leuchtstoffröhren auf, welche weißes, unpolarisiertes Licht im sichtbaren Wellenlängenbereich bereitstellen und die Hintergrundelemente 20 ausleuchten.

Die Anordnung zeigt die Polarisationsrichtungen A, B der Beleuchtungseinheiten 13 und 14, und von den ersten Beleuchtungseinheiten 13 auf der rechten Seite des Inspektionskanals 10 wird Licht in einer horizontalen Polarisationsrichtung ausgesandt, und mit den zweiten Beleuchtungseinheiten 14 auf der gegenüberliegenden linken Seite des Inspektionskanals 10 wird Licht mit einer vertikalen Polarisationsrichtung B ausgesandt.

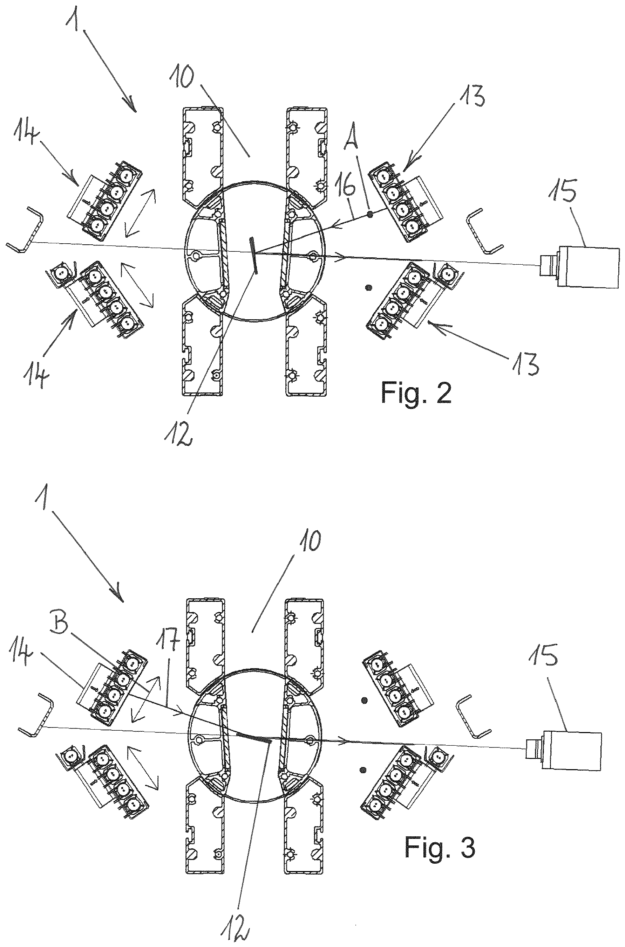

Figur 2 zeigt eine erste Einstrahlsituation beispielhaft über die erste Beleuchtungseinheit 13 auf der rechten Seite des Inspektionskanals 10 der Vorrichtung 1. Das von der ersten Beleuchtungseinheit 13 bereitgestellte Licht 16 ist horizontal verlaufend polarisiert und weist damit die erste Polarisationsrichtung A auf, die senkrecht zur Blattebene verläuft. Dabei verlaufen auch die Beleuchtungseinheiten 13 und 14 in ihrer Haupterstreckungsrichtung senkrecht zur Blattebene, sodass die Beleuchtungseinheiten 13 und 14 im Querschnitt gezeigt sind.

Die dargestellte erste Einstrahlsituation entsteht, indem das Fremdteil 12 eine eher vertikale Position einnimmt, die etwa der senkrecht verlaufenden Erstreckung des Inspektionskanals 10 entspricht. Dadurch wird das Licht 16 am Fremdteil 12 reflektiert, wobei die Polarisationsrichtung A im Wesentlichen erhalten bleibt und von der Kamera 15 erfasst wird. Aufgrund der vorbekannten ersten Polarisationsrichtung A des Lichtes 16, das durch die erste Beleuchtungseinheit 13 erzeugt wird, kann die Kamera 16 differenzieren, um welche Einstrahlseite es sich handelt. Entsprechend der Reflektion der Polarisationsrichtung A entstehen geringe Streuungen, sodass die von der Kamera 15 erfasst und bereitgestellte Lichtinformation mit einer entsprechend hohen Empfindlichkeit ausgewertet werden kann, da keine Störungen vorliegen, und es kann ein hoher Kontrast gewählt werden.

In der in Figur 3 gezeigten zweiten Einstrahlsituation detektiert die Kamera 15 Licht 17, das von einer zweiten Beleuchtungseinheit 14 auf der gegenüberliegenden Seite des Inspektionskanals 10 erzeugt wird. Das Licht 17 weist die zweite Polarisationsrichtung B auf, die in der Blattebene liegt und sich damit quer zur Haupterstreckungsrichtung der zweiten Beleuchtungseinheit 14 erstreckt. Aufgrund der Voreinstellung erkennt die Kamera 15, dass es sich aufgrund der zweiten Polarisationsrichtung B um Licht 17 handelt, das von der zur Kamera 15 gegenüberliegenden Beleuchtungseinheit 14 erzeugt wurde, entsprechend kann die Empfindlichkeit entsprechend reduziert werden, um zu vermeiden, dass aufgrund der sich einstellenden Streuung keine oder nur ein geringer Anteil an Fasermaterial mit detektiert wird. Die Reflexion über das Fremdteil 12 erfolgt, da dieses eine im Wesentlichen horizontale Erstreckung quer zur Hauptrichtung des Inspektionskanals 10 aufweist, sodass sich eine Reflexion des Lichtes 17 von der gegenüberliegenden Beleuchtungseinheit 14 ergibt, das von der Kamera 15 erkannt wird.

Über die in der Figur 1 gezeigte Auswerteeinheit 18 kann folglich mit der Polarisationsrichtung A erzeugtes Licht 16 mit einer höheren Empfindlichkeit durch die Kamera 15 ausgewertet werden als mit der Polarisationsrichtung B erzeugtes Licht 17.

Auf jeder Seite des Inspektionskanals 10 ist eine Kamera 15 angeordnet, und jeder der Kameras 15 ist eine Auswerteeinheit 18 zugeordnet. Beide Auswerteeinheiten 18 sind mit einer Steuereinheit 19 gekoppelt, um eine Ausschusseinheit anzusteuern, mit der die Fremdteile 12 aus dem Fasermaterialstrom 11 aus selektiert werden können. Die nicht gezeigte Ausschusseinheit ist der Vorrichtung 1 nachgelagert und im gezeigten Bild unterhalb am Inspektionskanal 10 angeordnet.

Die Erfindung beschränkt sich in ihrer Ausführung nicht auf das vorstehend angegebene Ausführungsbeispiel. Vielmehr ist eine Anzahl von Varianten denkbar, welche von der dargestellten Lösung auch bei grundsätzlich anders gearteten Ausführungen Gebrauch macht, solange diese im Rahmen der Ansprüche fallen.

### Bezugszeichen

- 1: Vorrichtung

- 10: Inspektionskanal
- 11: Fasermaterialstrom
- 12: Fremdteil
- 13: erste Beleuchtungseinheit
- 14: zweite Beleuchtungseinheit
- 15: Kamera
- 16: Licht
- 17: Licht
- 18: Auswerteeinheit
- 19: Steuereinheit
- 20: Hintergrundelement
- 21: Hintergrundbeleuchtung

- A: erste Polarisationsrichtung
- B: zweite Polarisationsrichtung

## Patentansprüche

1. Vorrichtung (1) zur Fremdteilerkennung in der Spinnereivorbereitung, aufweisend einen Inspektionskanal (10), durch den ein Fasermaterialstrom (11) hindurchführbar ist, wobei im Fasermaterialstrom (11) zu erkennende Fremdteile (12) vorhanden sind, wofür eine erste Beleuchtungseinheit (13) und wenigstens eine zweite Beleuchtungseinheit (14) zur Einstrahlung von Licht (16, 17) in den Inspektionskanal (10) vorgesehen sind, und wobei wenigstens eine Kamera (15) vorgesehen ist, mit der von den Beleuchtungseinheiten (13) erzeugtes und von dem Fremdteil (12) reflektiertes Licht (16, 17) detektierbar ist, **dadurch gekennzeichnet, dass** die erste Beleuchtungseinheit (13) zur Aussendung von Licht (16) mit einer ersten Polarisationsrichtung (A) und die zweite Beleuchtungseinheit (14) zur Aussendung von Licht (17) mit einer zweiten Polarisationsrichtung (B) ausgebildet ist, wobei die zweite Polarisationsrichtung (B) von der ersten Polarisationsrichtung (A) abweicht.

2. Vorrichtung (1) nach Anspruch 1, **dadurch gekennzeichnet, dass** die erste Polarisationsrichtung (A) und die zweite Polarisationsrichtung (B) senkrecht zueinander ausgebildet sind.

3. Vorrichtung (1) nach Anspruch 1 oder 2, **dadurch gekennzeichnet, dass** die erste Beleuchtungseinheit (13) auf der gleichen Seite des Inspektionskanals (10) angeordnet ist wie die Anordnung der Kamera (15) und dass die zweite Beleuchtungseinheit (14) auf der der ersten Beleuchtungseinheit (13) und der Kamera (15) gegenüberliegenden Seite des Inspektionskanals (10) angeordnet ist.

4. Vorrichtung (1) nach einem der Ansprüche 1 bis 3, **dadurch gekennzeichnet, dass** die wenigstens eine Kamera (15) zur getrennten Detektion von Licht (16, 17) in den Polarisationsrichtungen (A, B) ausgebildet ist.

5. Vorrichtung (1) nach Anspruch 4, **dadurch gekennzeichnet, dass** eine erste Lichtinformation in einem ersten Polarisationskanal und eine zweite Lichtinformation in einem zweiten Polarisationskanal von der Kamera (15) an eine Auswerteeinheit (18) übermittelbar ist.

6. Vorrichtung (1) nach Anspruch 5, **dadurch gekennzeichnet, dass** die Auswerteeinheit (18) zur Bildung eines Differenzwertes zwischen einem Wert der Lichtinformation aus dem ersten Polarisationskanal und einem Wert der Lichtinformation aus dem zweiten Polarisationskanal eingerichtet ist.

7. Vorrichtung (1) nach Anspruch 6, **dadurch gekennzeichnet, dass** eine Steuereinheit (19) vorgesehen und dazu eingerichtet ist, aus einem positiven oder negativen Differenzwert eine Einstrahlrichtung auf ein Fremdteil (12) zu ermitteln, insbesondere ob
- Licht (16) von der ersten Beleuchtungseinheit (13) bezogen auf die Anordnung der Kamera (15) auf der gleichen Seite des Inspektionskanals (10) detektiert wird oder ob
- Licht (17) von der zweiten Beleuchtungseinheit (14) bezogen auf die Anordnung der Kamera (15) auf der gegenüberliegenden Seite des Inspektionskanals (10) detektiert wird.

8. Verfahren zum Betrieb einer Vorrichtung (1) zur Fremdteilerkennung in der Spinnereivorbereitung, aufweisend einen Inspektionskanal (10), durch den ein Fasermaterialstrom (11) hindurchgeführt wird, wobei im Fasermaterialstrom (11) zu erkennende Fremdteile (12) mitgeführt werden, wobei mit einer ersten Beleuchtungseinheit (13) und mit wenigstens einer zweiten Beleuchtungseinheit (14) jeweils Licht (16, 17) in den Inspektionskanal (10) eingestrahlt wird, und wobei wenigstens eine Kamera (15) vorgesehen ist, mit der von den Beleuchtungseinheiten (13) erzeugtes und von dem Fremdteil (12) reflektiertes Licht (16, 17) detektiert wird, **dadurch gekennzeichnet, dass**
- mit der ersten Beleuchtungseinheit (13) Licht (16) mit einer ersten Polarisationsrichtung (A) ausgesendet wird,
- mit der zweiten Beleuchtungseinheit (14) Licht (17) mit einer zweiten Polarisationsrichtung (B) ausgesendet wird, wobei die zweite Polarisationsrichtung (B) von der ersten Polarisationsrichtung (A) abweicht, wobei
- eine erste Lichtinformation in einem ersten Polarisationskanal und eine zweite Lichtinformation in einem zweiten Polarisationskanal von der Kamera (15) an eine Auswerteeinheit (18) übermittelt wird, und wobei
- mit der Auswerteeinheit (18) ein Differenzwert zwischen einem Wert der Lichtinformation aus dem ersten Polarisationskanal und einem Wert der Lichtinformation aus dem zweiten Polarisationskanal gebildet wird.

9. Verfahren nach Anspruch 8, **dadurch gekennzeichnet, dass** eine Steuereinheit (19) vorgesehen ist, mit der aus einem positiven oder negativen Differenzwert eine Einstrahlrichtung auf das Fremdteil (12) ermittelt wird, insbesondere ob
- einstrahlendes Licht (16) von der ersten Beleuchtungseinheit (13) auf der gleichen Seite des Inspektionskanals (10) bezogen auf die Anordnung der Kamera (15) detektiert wird oder ob
- einstrahlendes Licht (17) von der zweiten Beleuchtungseinheit (14) auf der gegenüberliegenden Seite des Inspektionskanals (10) bezogen auf die Anordnung der Kamera (15) detektiert wird.

10. Verfahren nach Anspruch 8 oder 9, **dadurch gekennzeichnet, dass** die Auswerteeinheit (18) abhängig von der Einstrahlrichtung des Lichtes (16, 17) in der Empfindlichkeit zur Erkennung des Fremdteils (12) unterschiedlich parametriert wird.

## Claims

1. A device (1) for recognizing foreign parts in the spinning preparation, including an inspection channel (10), through which a stream of fibre material (11) is guidable, wherein foreign parts (12) to be recognized are present in the stream of fibre material (11), for this purpose a first lighting unit (13) and at least one second lighting unit (14) being provided for irradiating light (16, 17) into the inspection channel (10), and wherein at least one camera (15) is provided, by means of which light (16, 17) is detectable, which the lighting units (13) produce and which is reflected from the foreign part (12), **characterized in that** the first lighting unit (13) is formed for emitting light (16) with a first polarization direction (A) and the second lighting unit (14) for emitting light (17) with a second polarization direction (B), wherein the second polarization direction (B) differs from the first polarization direction (A).

2. The device (1) according to claim 1, **characterized in that** the first polarization direction (A) and the second polarization direction (B) are formed vertically with regard to each other.

3. The device (1) according to claim 1 or 2, **characterized in that** the first lighting unit (13) is disposed on the same side of the inspection channel (10) as the arrangement of the camera (15), and **in that** the second lighting unit (14) is disposed on the side of the inspection channel (10) opposite the first lighting unit (13) and the camera (15).

4. The device (1) according to any of the claims 1 to 3, **characterized in that** the at least one camera (15) is formed for separately detecting light (16, 17) in the polarization directions (A, B).

5. The device (1) according to claim 4, **characterized in that** a first light information in a first polarization channel and a second light information in a second polarization channel are transmittable by the camera (15) to an evaluation unit (18).

6. The device (1) according to claim 5, **characterized in that** the evaluation unit (18) is adapted for producing a differential value among a value of the light information from the first polarization channel and a value of the light information from the second polarization channel.

7. The device (1) according to claim 6, **characterized in that** a control unit (19) is provided and adapted to determine an irradiation direction onto a foreign part (12) from a positive or a negative differential value, in particular whether or not
- light (16) from the first lighting unit (13), with regard to the arrangement of the camera (15), is detected on the same side of the inspection channel (10), or whether or not
- light (17) from the second lighting unit (14), with regard to the arrangement of the camera (15), is detected on the opposite side of the inspection channel (10).

8. A method for operating a device (1) for recognizing foreign parts in the spinning preparation, including an inspection channel (10), through which a stream of fibre material (11) is guided, wherein foreign parts (12) to be recognized are guided along in the stream of fibre material (11), wherein a first lighting unit (13) and at least one second lighting unit (14) respectively irradiate light (16, 17) into the inspection channel (10), and wherein at least one camera (15) is provided, by means of which light (16, 17) is detected, which the lighting units (13) produce and which is reflected by the foreign part (12) , **characterized in that**
- with the first lighting unit (13), light (16) is emitted with a first polarization direction (A),
- with the second lighting unit (14), light (17) is emitted with a second polarization direction (B), wherein the second polarization direction (B) differs from the first polarization direction (A), wherein
- a first light information in a first polarization channel and a second light information in a second polarization channel is transmitted by the camera (15) to an evaluation unit (18), and wherein
- the evaluation unit (18) produces a differential value among a value of the light information from the first polarization channel and a value of the light information from the second polarization channel.

9. The method (1) according to claim 8, **characterized in that** a control unit (19) is provided, by means of which, from a positive or a negative differential value, an irradiation direction onto the foreign part (12) is determined, in particular whether or not
- light (16) irradiating from the first lighting unit (13) is detected on the same side of the inspection channel (10) with regard to the arrangement of the camera (15), or whether or not
- light (17) from the second lighting unit (14) is detected on the opposite side of the inspection channel (10) with regard to the arrangement of the camera (15).

10. The method according to claim 8 or 9, **characterized in that**, depending on the irradiation direction of the light (16, 17), the evaluation unit (18) is differently parameterized in terms of sensitivity for recognizing the foreign part (12).

## Revendications

1. Dispositif (1) pour la détection de pièces étrangères dans la préparation à la filature, comprenant une gaine d'inspection (10), un flux de matière de fibres (11) étant guidable à travers cette dernière, des pièces étrangères (12) à reconnaître étant présentes dans le flux de matière de fibres (11), une première unité d'illumination (13) et au moins une deuxième unité d'illumination (14) étant prévues pour irradier de la lumière (16, 17) dans la gaine d'inspection (10), et au moins une caméra (15) étant prévue avec laquelle est détectable de la lumière (16, 17) produite par les unités d'illumination (13) et réfléchie par la pièce étrangère (12), **caractérisé en ce qu'**étant aménagées la première unité d'illumination (13) pour émettre de la lumière (16) avec une première direction de polarisation (A) et la deuxième unité d'illumination (14) pour émettre de la lumière (17) avec une deuxième direction de polarisation (B), la deuxième direction de polarisation (B) se distinguant de la première direction de polarisation (A).

2. Dispositif (1) selon la revendication 1, **caractérisé en ce que** la première direction de polarisation (A) et la deuxième direction de polarisation (B) sont aménagées verticalement l'une à l'autre.

3. Dispositif (1) selon la revendication 1 ou 2, **caractérisé en ce que** la première unité d'illumination (13) est agencée du même côté de la gaine d'inspection (10) que l'agencement de la caméra (15) et que la deuxième unité d'illumination (14) est agencée du côté opposé de la gaine d'inspection (10) par rapport à l'unité d'illumination (13) et la caméra (15).

4. Dispositif (1) selon l'une des revendications 1 à 3, **caractérisé en ce que** ladite au moins une caméra (15) est aménagée pour détecter de la lumière (16, 17) séparément en fonction des directions de polarisation (A, B).

5. Dispositif (1) selon la revendication 4, **caractérisé en ce qu'**une première information lumineuse dans une première gaine de polarisation et une deuxième information lumineuse dans une deuxième gaine de polarisation sont transférables de la caméra (15) à une unité d'évaluation (18).

6. Dispositif (1) selon la revendication 5, **caractérisé en ce que** l'unité d'évaluation (18) est aménagée à fournir une valeur différentielle entre une valeur de l'information lumineuse de la première gaine de polarisation et une valeur de l'information lumineuse de la deuxième gaine de polarisation.

7. Dispositif (1) selon la revendication 6, **caractérisé en ce qu'**une unité de commande (19) est prévue et aménagée à déterminer, à partir d'une valeur différentielle positive ou négative, une direction d'irradiation sur la pièce étrangère (12), tout particulièrement si
- de la lumière (16) de la première unité d'illumination (13) par rapport à l'agencement de la caméra (15) est détectée du même côté de la gaine d'inspection (10), ou si
- de la lumière (17) de la deuxième unité d'illumination (14) par rapport à l'agencement de la caméra (15) est détectée du côté opposé de la gaine d'inspection (10).

8. Méthode pour opérer un dispositif (1) pour la détection de pièces étrangères dans la préparation à la filature, comprenant une gaine d'inspection (10), un flux de matière de fibres (11) étant guidé à travers cette dernière, des pièces étrangères (12) à reconnaître étant guidées dans le flux de matière de fibres (11), avec une première unité d'illumination (13) et avec au moins une deuxième unité d'illumination (14) de la lumière (16, 17) respective étant irradiée dans la gaine d'inspection (10), et étant prévue au moins une caméra (15) avec laquelle est détectée de la lumière (16, 17) produite par les unités d'illumination (13) et réfléchie par la pièce étrangère (12), **caractérisée en ce que**
- la première unité d'illumination (13) émet de la lumière (16) avec une première direction de polarisation (A),
- la deuxième unité d'illumination (14) émet de la lumière (17) avec une deuxième direction de polarisation (B), la deuxième direction de polarisation (B) se distinguant de la première direction de polarisation (A),
- une première information lumineuse dans une première gaine de polarisation et une deuxième information lumineuse dans une deuxième gaine de polarisation étant transférées de la caméra (15) à une unité d'évaluation (18), et
- une valeur différentielle entre une valeur de l'information lumineuse de la première gaine de polarisation et une valeur de l'information lumineuse de la deuxième gaine de polarisation étant produite avec l'unité d'évaluation (18).

9. Méthode selon la revendication 8, **caractérisée en ce qu'**une unité de commande (19) est prévue, avec laquelle est déterminée, à partir d'une valeur différentielle positive ou négative, une direction d'irradiation sur la pièce étrangère (12), tout particulièrement si
- de la lumière (16) entrant de la première unité d'illumination (13), par rapport à l'agencement de la caméra (10), est détectée du même côté de la gaine d'inspection (15), ou si
- de la lumière (17) entrant de la deuxième unité d'illumination (14), par rapport à l'agencement de la caméra (15), est détectée du côté opposé de la gaine d'inspection (10).

10. Méthode selon la revendication 8 ou 9, **caractérisée en ce que** la sensibilité de l'unité d'évaluation (18) pour détecter la pièce étrangère (12) est paramétrée différemment en fonction de la direction d'irradiation de la lumière (16, 17).
